# FASCICULE DE BREVET EUROPEEN

(11) **EP 0 562 990 B1**
(45) Date de publication et mention de la délivrance du brevet: **25.01.1995**
(21) Numéro de dépôt: 93440029.2
(22) Date de dépôt: 23.03.1993
(51) Int. Cl.: H01S 3/098, H01S 3/13

(54) **Dispositif de synchronisation sans fluctuation temporelle pour un laser à couplage actif des modes**
Verfahren zur Synchronisation ohne zeitliche Fluktuation eines aktiv modengekoppelten Lasers
Method of synchronisation of an active mode locked laser without temporal fluctuations

(30) Priorité: 24.03.1992 LU 88089
(43) Date de publication de la demande: 29.09.1993
(73) Titulaire: COMMUNAUTE ECONOMIQUE EUROPEENNE (CEE), L-2920 Luxembourg (LU)
(72) Inventeur: Miehe, Joseph-Albert, F-67200 Strasbourg (FR); Cunin, Bernard, F-67200 Strasbourg (FR); Geist, Paul, F-67300 Schiltigheim (FR); Grossetie, Jean-Claude, I-21027 Ispra (VA) (FR); Martz, Alphonse, F-67840 Kilstett (FR)
(74) Mandataire: Nuss, Pierre

(56) Documents cités:
- FR-A- 2 102 112
- INSTRUMENTS AND EXPERIMENTAL TECHNIQUES vol. 24, no. 2, Mars 1981, NEW YORK US,pages 484 - 486;K.N. BAKINOVSKII ET AL 'subnanosecond optical generator using argon ion laser'
- JOURNAL OF APPLIED PHYSICS. vol. 56, no. 3, 1 Août 1984, NEW YORK US,pages 862- 864;E.O.GöBEL ET AL 'Synchronous mode locking of semiconductor laser diodes by a picosecond optoelectronic switch'

## Description

La présente invention concerne le domaine de la commande du fonctionnement de dispositifs à laser (voir Instruments and Experimental Techniques, vol. 24, no. 2, Mars 1981, pages 484-486), et a pour objet un dispositif de synchronisation sans fluctuation temporelle pour un laser à couplage actif des modes.

Actuellement, le blocage des modes longitudinaux des lasers impulsionnels pompés en continu, tels que les lasers à argon ionisé ou à Nd : YAG est généralement effectué au moyen de synthétiseurs de fréquence ou d'oscillateurs à quartz très hautes fréquences, possédant une très bonne stabilité à long terme.

Différentes expériences de mesures ont montré l'existence de fluctuations temporelles entre le signal sinusoïdal qui pilote le bloqueur de modes et le signal lumineux émis par le laser correspondant. L'écart type desdites fluctuations est généralement de l'ordre de plusieurs dizaines de picosecondes.

En outre, des analyses spectrales du signal impulsionnel très haute fréquence émis par le laser, de l'ordre de 100 MHz, ont permises de mettre en évidence que les fluctuations temporelles de la période dudit signal restent inférieures à environ 5 picosecondes.

Les résultats précités, à savoir la présence d'instabilités à court terme dont les valeurs relatives sont supérieures à 10⁻⁴, ont été couramment retrouvés en reproduisant les mesures expérimentales décrites ci-dessus, ce malgré la mise en oeuvre d'oscillateurs très hautes fréquences présentant une stabilité relative à long terme au moins égale à 10⁻⁹, soit une précision de l'ordre de 10⁻¹⁷ seconde.

L'explication de l'apparente contradiction provenant de la différence importante existant entre l'excellente stabilité du signal issu de l'oscillateur et celle nettement moindre du signal impulsionnel périodique émis par le laser, a été fournie, suite à des investigations détaillées ultérieures, par la découverte de variations aléatoires instantanées de la période au niveau de l'oscillateur ou du synthétiseur de fréquence de l'ordre de plusieurs dizaines de picosecondes, ce même pour les dispositifs de ce type les plus performants.

Le problème posé à la présente invention consiste donc à concevoir un dispositif de contrôle du blocage des modes longitudinaux d'un laser impulsionnel périodique permettant d'obtenir un signal lumineux résultant ne présentant, au plus, que des variations aléatoires instantanées de la période de très faible valeur.

Ce problème est précisément résolu grâce à un dispositif de synchronisation sans fluctuation temporelle pour un laser à couplage actif des modes, selon l'invention, caractérisé en ce qu'il est principalement constitué, d'une part, par un laser de base impulsionnel, dont le blocage des modes longitudinaux est commandé par un oscillateur ou un synthétiseur de très hautes fréquences au moyen d'un premier modulateur acousto-optique, d'autre part, par une unité de transformation et de filtrage des signaux émis par ledit laser de base et, enfin, par un second modulateur acousto-optique piloté par le signal filtré issu de l'unité précitée et assurant le blocage des modes longitudinaux du laser à contrôler, permettant d'obtenir un signal lumineux impulsionnel périodique ne présentant pratiquement aucune fluctuation aléatoire instantanée de la période.

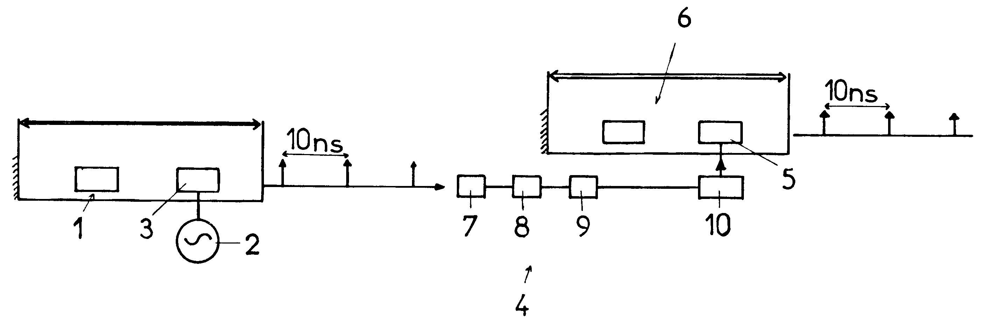

L'invention sera mieux comprise, grâce à la description ci-après, qui se rapporte au mode de réalisation préféré, donné à titre d'exemple non limitatif, et expliqué avec référence au dessin schématique annexé, dont la figure unique est une représentation de principe du dispositif de synchronisation selon l'invention.

Conformément à l'invention et comme le montre la figure du dessin annexé, le dispositif de synchronisation est principalement constitué d'une part, par un laser de base 1 impulsionnel, dont le blocage des modes longitudinaux est commandé par un oscillateur 2 ou un synthétiseur de très hautes fréquences au moyen d'un premier modulateur acousto-optique 3, d'autre part, par une unité 4 de transformation et de filtrage des signaux émis par ledit laser de base 1 et, enfin, par un second modulateur acousto-optique 5 piloté par le signal filtré issu de l'unité 4 précitée et assurant le blocage des modes longitudinaux du laser 6 à contrôler, permettant d'obtenir un signal lumineux impulsionnel périodique ne présentant pratiquement aucune fluctuation aléatoire instantanée de la période.

Selon une caractéristique de l'invention, l'unité 4 est avantageusement composée, d'une part, d'une photodiode 7 ultra-rapide captant les impulsions du laser de base 1, d'autre part, d'une diode à effet tunnel 8 mettant en forme le signal issu de la photodiode 7 et, enfin, d'un filtre passe-bande 9 étroit, centré sur la fréquence de répétition du laser de base 1 et traitant le signal reconstitué par la diode à effet tunnel 8.

Le signal lumineux, impulsionnel et périodique, émis par le laser de base, et sujet à des fluctuations aléatoires instantanées de la période, est par conséquent transformé en un signal de nature électrique permettant un traitement au moyen d'un filtre passe-bande 9 classique.

Ce signal filtré permet alors de produire par l'intermédiaire d'un modulateur acousto-optique 5, pouvant se présenter sous la forme d'un cristal bloqueur de modes du type connu sous la désignation ML par la société Intra Action, et contrôlant le blocage des modes longitudinaux d'un laser 6, un signal lumineux périodique, également de type impulsionnel, dont les fluctuations de la période sont négligeables.

Ainsi pour un laser 6 présentant une fréquence de répétition des impulsions de l'ordre de 100 MHz, les fluctuations de la période sont inférieures à la picoseconde.

De manière préférentielle, la photodiode 7 est du type connu sous la désignation BPX 65 par la société Centronic et la diode à effet tunnel est avantageusement du type connu sous la désignation TD 265A par la société général Electric.

Afin de pouvoir régler la période du signal impulsionnel émis par le laser 6 à une valeur donnée, indépendamment de la période du signal du laser de base 1, un diviseur de fréquence 10 est prévu entre l'unité 4 de transformation et de filtrage et le second modulateur acousto-optique 5.

Bien entendu, l'invention n'est pas limitée au mode de réalisation décrit et représenté au dessin annexé. Des modifications restent possibles, notamment du point de vue de la constitution des divers éléments, ou par substitution d'équivalents techniques, sans sortir pour autant du domaine de protection de l'invention.

## Revendications

1. Dispositif de synchronisation sans fluctuation temporelle pour un laser à couplage actif des modes, le dispositif étant principalement constitué, d'une part, par un laser de base (1) impulsionnel, dont le blocage des modes longitudinaux est commandé par un oscillateur (2) ou un synthétiseur de très hautes fréquences au moyen d'un premier modulateur acousto-optique (3), d'autre part, par une unité (4) de transformation et de filtrage des signaux émis par ledit laser de base (1) et, enfin, par un second modulateur acousto-optique (5) piloté par le signal filtré issu de l'unité (4) précitée et assurant le blocage des modes longitudinaux du laser (6) à contrôler, permettant d'obtenir un signal lumineux impulsionnel périodique ne présentant pratiquement aucune fluctuation aléatoire instantanée de la période.

2. Dispositif de synchronisation selon la revendication 1, caractérisé en ce que l'unité (4) est avantageusement composée, d'une part, d'une photodiode (7) ultra-rapide captant les impulsions du laser de base (1), d'autre part, d'une diode à effet tunnel (8) mettant en forme le signal issu de la photodiode (7) et, enfin, d'un filtre passe-bande (9) étroit, centré sur la fréquence de répétition du laser de base (1) et traitant le signal reconstitué par la diode à effet tunnel (8).

3. Dispositif de synchronisation selon l'une quelconque des revendications 1 et 2, caractérisé en ce qu'un diviseur de fréquence (10) est prévu entre l'unité (4) de transformation et de filtrage et le second modulateur acousto-optique (5).

## Patentansprüche

1. Vorrichtung zur Synchronisation ohne zeitliche Fluktuation eines aktiv modengekoppelten Lasers, die hauptsächlich aufweist einerseits einen Impuls-Basislaser (1), dessen Sperrung der Längsschwingungen mit einem Oszillator (2) oder einem Synthesator sehr hoher Frequenzen mittels eines ersten akusto-optischen Modulators (3) gesteuert wird, andererseits eine Wandel- und Filtereinheit (4) für die von dem Basislaser (1) ausgesandten Signale und schließlich einen zweiten akusto-optischen Modulator (5), der durch das von der Einheit (4) abgegebene gefilterte Signal gesteuert ist und die Sperrung der Längsschwingungen des zu steuernden Lasers (6) sicherstellt, wodurch ein periodisches Impuls-Lichtsignal erhalten wird, das praktisch keine zufällige Momentanfluktuation der Periode aufweist.

2. Vorrichtung zur Synchronisation nach Anspruch 1,
dadurch gekennzeichnet,
daß die Einheit (4) vorteilhaft aufweist zum einen eine ultraschnelle Photodiode (7), die die Impulse des Basislasers (1) aufnimmt, zum anderen eine Tunneldiode (8), die das von der Photodiode (7) abgegebene Signal formt und weiterhin ein schmales Bandpaßfilter (9), das auf die Wiederholfrequenz des Basislasers (1) zentriert ist und auf das durch die Tunneldiode (8) gebildete Signal einwirkt.

3. Vorrichtung zur Synchronisation nach Anspruch 1 oder 2,
dadurch gekennzeichnet,
daß ein Frequenzteiler (10) zwischen der Wandler- und Filtereinheit (4) und dem zweiten akusto-optischen Modulator (5) vorgesehen ist.

## Claims

1. Synchronisation device without temporal fluctuations for a laser with active mode coupling, the device consisting mainly, on the one hand, of a pulsed base laser (1) of which the blocking of the longitudinal modes is controlled by a very high frequency oscillator (2) or synthesizer by means of a first acousto-optical modulator (3), on the other hand, of a unit (4) for the transformation and filtration of signals emitted by said base laser (1) and, finally, of a second acousto-optical modulator (5) operated by the filtered signal issuing from the aforementioned unit (4) and blocking the longitudinal modes of the laser (6) to be checked, allowing a periodic pulsed light signal having virtually no instantaneous random fluctuation of the period to be obtained.

2. Synchronisation device according to claim 1, characterised in that the unit (4) is advantageously composed, on the one hand, of an ultra-rapid photodiode (7) sensing the pulses of the base laser (1), on the other hand, of a tunnel effect diode (8) shaping the signal issuing from the photodiode (7) and, finally, of a narrow bandpass filter (9) centred on the repetition frequency of the base laser (1) and processing the signal reconstituted by the tunnel effect diode (8).

3. Synchronisation device according to any one of claims 1 and 2, characterised in that a frequency divider (10) is provided between the transformation and filtration unit (4) and the second acousto-optical modulator (5).
